# EUROPEAN PATENT SPECIFICATION

(11) **EP 4 391 177 B1**
(45) Date of publication and mention of the grant of the patent: **09.09.2026**
(21) Application number: 23843254.6
(22) Date of filing: 11.07.2023
(51) Int. Cl.: B60L 50/64, H01M 50/211, H01M 50/224, H01M 50/242, H01M 50/249, H01M 50/358, H01M 50/238, H01M 50/291, H01M 50/293, H01M 50/30

(54) **BATTERY PACK AND VEHICLE INCLUDING THE SAME**
BATTERIEPACK UND FAHRZEUG DAMIT
BLOC-BATTERIE ET VÉHICULE LE COMPRENANT

(30) Priority: 20.07.2022 KR 20220089756; 20.07.2022 KR 20220089757
(43) Date of publication of application: 26.06.2024
(73) Proprietor: LG Energy Solution, Ltd., Seoul 07335 (KR)
(72) Inventor: PARK, Jeong-Hoon, Daejeon 34122 (KR); YOON, Ka-Hyun, Daejeon 34122 (KR); JUNG, Hye-Mi, Daejeon 34122 (KR); CHANG, Hyuk-Kyun, Daejeon 34122 (KR); CHOI, Jung-Woo, Daejeon 34122 (KR)
(74) Representative: Plasseraud IP
(86) International application number: PCT/KR2023/009894
(87) International publication number: WO 2024/019403

(56) References cited:
- EP-A1- 3 301 738
- EP-A1- 3 836 244
- WO-A1-2022/126841
- KR-A- 20160 148 398
- KR-A- 20170 142 446
- KR-A- 20170 142 446
- KR-A- 20180 068 379
- KR-A- 20200 033 666
- US-A1- 2018 358 593

## Description

### TECHNICAL FIELD

The present application claims priority to Korean Patent Application Nos. 10-2022-0089756 and 10-2022-0089757, respectively filed on July 20, 2022 and July 20, 2022 in the Republic of Korea.

The present disclosure relates to a battery pack and a vehicle including the same, and more particularly, to a battery pack having excellent stability against a thermal event and a vehicle including the battery pack.

### BACKGROUND ART

As technology development and demand for various mobile devices, electric vehicles, and energy storage systems (ESSs) increase significantly, interest in and demand for secondary batteries as energy sources are rapidly increasing.

Nickel cadmium batteries or nickel hydride batteries have been widely used as conventional secondary batteries, but recently, lithium secondary batteries, which have almost no memory effect compared to nickel-based secondary batteries and thus have advantages of free charge/discharge, very low self-discharge rate, and high energy density, have been widely used.

A lithium secondary battery mainly uses a lithium-based oxide and a carbon material as a positive electrode active material and a negative electrode active material, respectively. A lithium secondary battery includes an electrode assembly in which a positive electrode plate and a negative electrode plate coated with a positive electrode active material and a negative electrode active material are located with a separator therebetween, and a casing in which the electrode assembly is air-tightly accommodated together with an electrolyte, that is, a battery case.

In general, according to a shape of a casing, secondary batteries may be classified into can-type batteries in which an electrode assembly is received in a metal can, and pouch-type batteries in which an electrode assembly is received in a pouch of an aluminum laminate sheet.

Recently, battery packs have been widely used for driving or energy storage in medium and large-sized devices such as electric vehicles or ESS.

A conventional battery pack includes one or more battery modules and a control unit for controlling charging and discharging of the battery pack in a pack case. The battery module includes a plurality of battery cells in a module case. EP 3 836 244 and KR 2017 0142446 discloses a battery pack. US 2018/358593 discloses a cell module assembly. EP 3 301 738 discloses a battery module.

That is, in a conventional battery pack, a plurality of battery cells (secondary batteries) are accommodated in a module case to constitute each battery module, and one or more battery modules are accommodated in a pack case to constitute a battery pack.

In particular, pouch-type batteries have advantages in many aspects such as light weight and small dead space when stacked, but are vulnerable to external impact and have poor assemblability.

Accordingly, it is common to manufacture a battery pack by first modularizing a plurality of cells and then accommodating the plurality of cells in a pack case.

However, a conventional battery pack may be disadvantageous in terms of energy density, assemblability, and cooling due to modularization. Also, a conventional battery pack or battery module may be vulnerable to a thermal event. **In** particular, when a thermal event occurs in a battery module or a battery pack, thermal runaway may occur, resulting in a flame and in severe cases, explosion.

### DISCLOSURE

### Technical Problem

The present disclosure is designed to solve the problems of the related art, and therefore the present disclosure is directed to providing a battery pack that may ensure excellent safety when a thermal event occurs, and a vehicle including the battery pack.

However, technical objectives to be achieved by the present disclosure are not limited thereto, and other unmentioned technical objectives will be apparent to one of ordinary skill in the art from the description of the present disclosure.

### Technical Solution

**In** one aspect of the present disclosure, there is provided a battery pack as defined in claim 1. The battery pack includes a plurality of pouch-type battery cells, a pack case having an inner space in which the plurality of pouch-type battery cells are accommodated, and a plurality of cell covers provided in the inner space of the pack case to at least partially surround at least some of the plurality of pouch-type battery cells, the plurality of cell covers being each configured to have a length that is changeable in a width direction according to a change in a thickness of the pouch type battery cell.

One or more discharge holes are formed at the bottom of the pack case, wherein a communication area with the one or more discharge holes is variable through a change in the length of the cell cover in the width direction.

In an embodiment, the cell cover may be configured to surround both side surfaces and an upper side of the at least some pouch-type battery cells.

In an embodiment, the cell cover includes an upper cover portion formed on an upper side, wherein the upper cover portion is formed in a wave shape or a wrinkled shape.

In an embodiment, a triangle portion folded into a triangular shape may be formed on the upper cover portion.

In an embodiment, the cell cover may be configured to support a state where the plurality of pouch-type battery cells are stacked.

In an embodiment, the cell cover may be formed in an 'n' shape.

In an embodiment, the cell cover may be formed of a metal material.

In an embodiment, the battery pack may further include a bus bar configured to connect a plurality of electrode leads.

In an embodiment, the cell cover may be configured to partially surround the pouch-type battery cell so that at least one side of the surrounded pouch-type battery cell is exposed to outside.

In an embodiment, the cell cover may be configured so that at least one side of the surrounded pouch-type battery cell is exposed toward a bottom surface of the battery pack.

In an embodiment, the cell cover may be directly seated on the pack case.

In another aspect of the present disclosure, there is provided a vehicle including the battery pack.

### Advantageous Effects

According to one aspect of the present disclosure, a plurality of pouch-type battery cells may be stably accommodated in a pack case or module case, even without a stacking frame such as a plastic cartridge or a separate module case.

Furthermore, according to one aspect of the present disclosure, a pouch-type battery cell having a case including a flexible material case may be easily made into a sturdy form, and thus, a configuration in which the pouch-type battery cell is directly stacked in a pack case may be more easily implemented. Accordingly, the asseblability and mechanical stability of a battery pack or a battery module may be improved.

Also, according to one aspect of the present disclosure, when thermal runaway occurs in a specific battery cell, a thermal event may be effectively dealt with. **In** particular, in the present disclosure, from among three elements (fuel, oxygen, and ignition source) with which a flame is generated, the accumulation or discharge of heat corresponding to the ignition source may be blocked or appropriately controlled. Furthermore, in the present disclosure, to block heat accumulation and prevent flame emission, venting gas emission control, directional venting, and flame exposure suppression may be performed.

**In** particular, according to an embodiment of the present disclosure, the safety of a user located on an upper side, such as a passenger, may be improved by performing directional venting downward.

Also, according to one aspect of the present disclosure, an internal short circuit or structural collapse may be effectively prevented when a thermal event occurs by rapidly relieving internal pressure of a module through parallel flame emission.

Also, according to one aspect of the present disclosure, cooling performance and energy density may be improved by removing a module case as a cell-to-pack (CTP) concept.

The present disclosure may have various other effects, which will be described in each embodiment, or descriptions of effects that may be easily inferred by one of ordinary skill in the art will be omitted.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a schematic exploded perspective view illustrating a battery pack according to an embodiment of the present disclosure.
FIGS. 2 to 4 are views illustrating a process of coupling a cell cover to a pouch-type battery cell accommodated in a battery pack and connecting two pouch-type battery cells to a bus bar according to an embodiment of the present disclosure.
FIG. 5 is a cross-sectional view illustrating a pouch-type battery cell accommodated in a battery pack according to an embodiment of the present disclosure.
FIG. 6 is a view illustrating a process of changing a length of a cell cover according to expansion and contraction of the pouch-type battery cell of FIG. 5.
FIG. 7 is a view schematically illustrating a pack case of a battery pack according to an embodiment of the present disclosure.
FIG. 8 is a view illustrating a modified embodiment of FIG. 5.
FIG. 9 is a view for describing a vehicle including a battery pack according to each embodiment of the present disclosure.

### BEST MODE

Hereinafter, preferred embodiments of the present disclosure will be described in detail with reference to the accompanying drawings. It should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the present disclosure, so it should be understood that other equivalents and modifications could be made thereto without departing from the scope of the present disclosure.

The size of each element or a specific portion of the element shown in the drawings may be exaggerated, omitted or schematically drawn for the purpose of convenience and clarity of explanation. Accordingly, the size of each element may not substantially reflect its actual size. While describing the present disclosure, detailed descriptions of related well-known functions or configurations that may blur the points of the present disclosure are omitted.

Also, in the present specification, it will be understood that when elements are "coupled" or "connected" to each other, the elements may be directly coupled or connected to each other, or may be indirectly coupled or connected to each other with an intervening element therebetween.

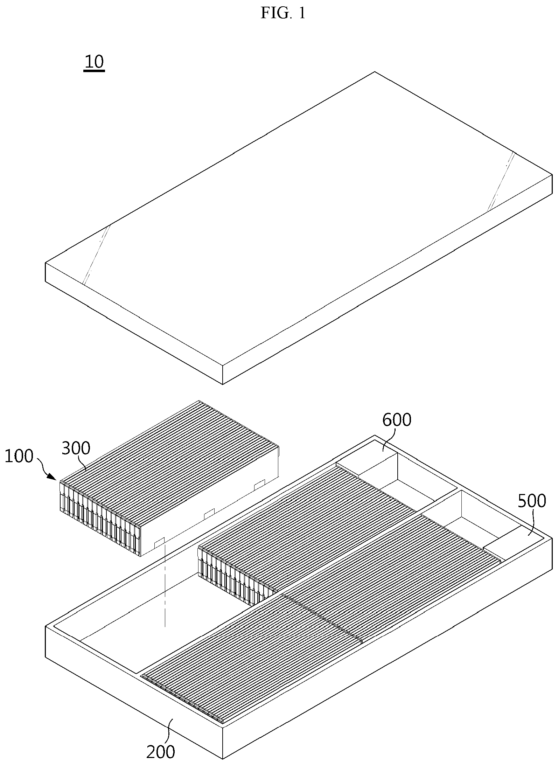

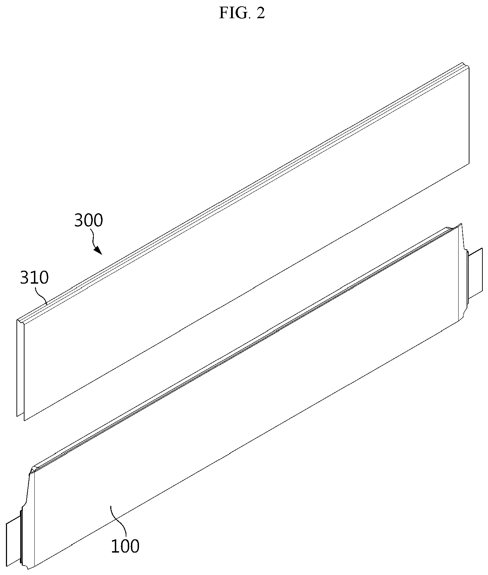

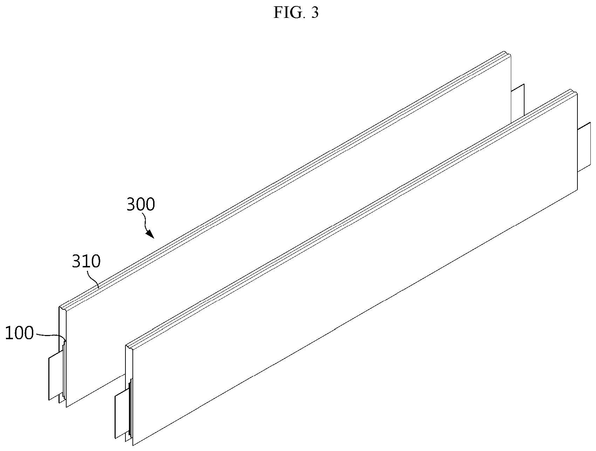

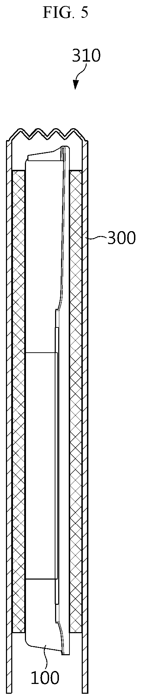

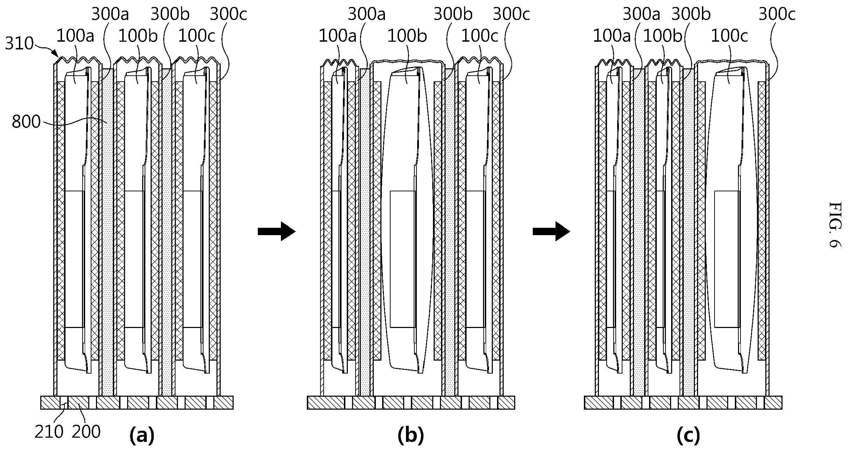

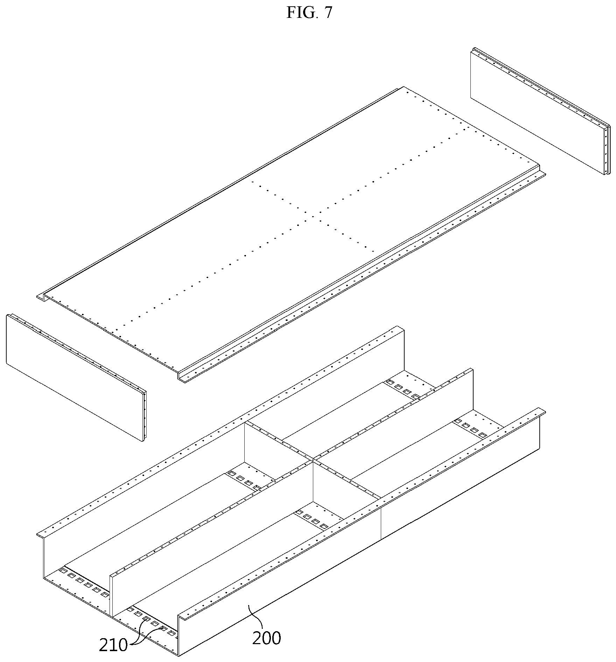

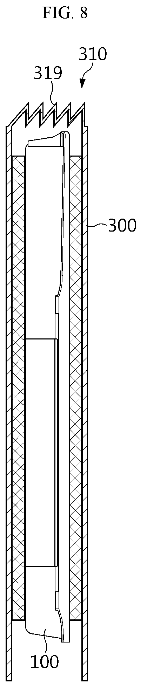

FIG. 1 is a schematic exploded perspective view illustrating a battery pack according to an embodiment of the present disclosure. FIGS. 2 to 4 are views illustrating a process of coupling a cell cover to a pouch-type battery cell accommodated in a battery pack and connecting two pouch-type battery cells to a bus bar according to an embodiment of the present disclosure. FIG. 5 is a cross-sectional view illustrating a pouch-type battery cell accommodated in a battery pack according to an embodiment of the present disclosure. FIG. 6 is a view illustrating a process of changing a length of a cell cover according to expansion and contraction of the pouch-type battery cell of FIG. 5. FIG. 7 is a view schematically illustrating a pack case of a battery pack according to an embodiment of the present disclosure. FIG. 8 is a view illustrating a modified embodiment of FIG. 5.

The present disclosure relates to a battery pack 10 in which a battery cell 100 may be directly accommodated in a pack case 200 of the battery pack 10 by removing a battery module.

Accordingly, because the battery cell 100 may be further accommodated in a space occupied by a module case of the battery module in the battery pack 10, space efficiency may be improved and battery capacity may be improved. That is, in the present disclosure, the module case of the battery module may not be included in a configuration.

However, an embodiment of using the module case is not excluded, and the pouch-type battery cell 100 of each embodiment of the present disclosure may be configured to be accommodated in the module case provided in the battery module when necessary.

That is, the battery module including the pouch-type battery cell 100 to which a cell cover 300 in each embodiment is coupled also falls within the scope of the present disclosure.

Even when simply described as the battery cell 100 in the specification, the battery cell 100 refers to the pouch-type battery cell 100.

Referring to FIG. 1, the battery pack 10 according to an embodiment of the present disclosure includes the pouch-type battery cell 100, the pack case 200, and the cell cover 300.

The pouch-type battery cell 100 that is a pouch-type secondary battery may include an electrode assembly, an electrolyte, and a pouch casing. A plurality of pouch-type battery cells 100 may be included in the battery pack 10. The plurality of pouch-type battery cells 100 may be stacked in at least one direction.

The pack case 200 may have an empty inner space, and the pouch-type battery cells 100 may be accommodated in the inner space. In particular, in the present disclosure, the pouch-type battery cell 100 may be directly seated on the pack case 200.

Referring to FIGS. 2 to 4, the cell cover 300 may be provided to at least partially surround the pouch-type battery cell 100. For example, the cell cover 300 may be configured to surround both side surfaces and an upper side of at least some pouch-type battery cells 100. However, the present disclosure is not limited thereto.

The cell cover 300 may be configured to partially surround the pouch-type battery cell 100 so that at least one side of the surrounded pouch-type battery cell 100 is exposed to the outside.

The cell cover 300 may be configured to support the pouch-type battery cell 100 in an upright state. In general, it is not easy to stack the pouch-type battery cells 100 in a vertical direction.

However, in the battery pack 10 according to the present disclosure, the cell cover 300 may be configured to surround one or more pouch-type battery cells 100 and maintain the surrounded battery cells 100 in an upright state, that is, an erected state.

The cell cover 300 may be configured so that at least one side of the surrounded pouch-type battery cell 100 is exposed toward a bottom surface of the battery pack 10.

Referring to FIG. 1, the cell cover 300 configured to surround at least some of the plurality of pouch-type battery cells 100 may be accommodated in the inner space of the pack case 200.

The cell cover 300 may be configured to surround a various number of pouch-type battery cells 100 together. For example, the cell cover 300 may be configured to surround one pouch-type battery cell 100. Alternatively, the cell cover 300 may be configured to surround two pouch-type battery cells 100 together, or may be configured to surround three or more pouch-type battery cells 100 together.

The cell cover 300 includes an upper cover portion 310 formed on an upper side. The upper cover portion 310 may be formed in various ways. For example, the upper cover portion 310 may be formed in, but not limited to, a wrinkled shape. According to the invention, as shown in FIG. 5, the upper cover portion 310 having a wave shape or a wrinkled shape is formed on an upper side of the cell cover 300. The upper cover portion 310 may be formed in any of various sizes or shapes.

A wrinkled structure of the upper cover portion 310 may be formed in an uneven shape. For example, the cell cover 300 may have a structure in which a portion concave toward an inner side where the battery cell 100 is located and a portion convex outward are repeated.

Referring to FIG. 1, the cell cover 300 may be directly seated on an upper surface of the pack case 200. For example, a lower end of the cell cover 300 may directly contact and be seated on the upper surface of the pack case 200.

**In** particular, the cell cover 300 and the pouch-type battery cell 100 may be directly seated on the pack case 200 without being accommodated in a separate module case. However, as described above, an embodiment of locating the cell cover 300 and the pouch-type battery cell 100 on the module case and modularizing them is not excluded.

Accordingly, the cooling performance of the battery pack 10 may be more effectively ensured. **In** particular, because the pouch-type battery cell 100 may be in face-to-face contact with the pack case 200, heat emitted from each pouch-type battery cell 100 may be directly transferred to the pack case 200, thereby improving cooling performance.

The cell cover 300 may be configured to support a state where the plurality of pouch-type battery cells 100 are stacked. **In** particular, the plurality of pouch-type battery cells 100 may be horizontally stacked in an upright state, and the cell cover 300 may be configured to stably support the plurality of pouch-type battery cells 100 in the upright state.

Referring to FIG. 5, the cell cover 300 may be formed in a substantially 'n' shape. **In** this case, a front side, a rear side, and a lower side of the cell cover 300 may be open.

However, a shape of the cell cover 300 is not limited to the substantially 'n' shape. The cell cover 300 may be formed in any of various shapes. For example, the cell cover 300 may be formed in a '□' shape, a 'U' shape, or a 'O' shape.

The cell cover 300 may be formed of a metal material. In particular, the cell cover 300 may be formed of a steel material, for example, stainless steel (SUS).

**In** this case, because a stainless steel material has excellent mechanical strength and rigidity and a higher melting point than an aluminum material, even when a flame is generated in an arbitrary battery cell 100, melting of the cell cover 300 by the flame or the like may be more effectively prevented.

That is, damage or breakage of the pouch-type battery cell 100 may be more effectively prevented, and handling of the pouch-type battery cell 100 may be made easier. However, a material of the cell cover 300 is not limited thereto.

The cell cover 300 may be at least partially adhered to the pouch-type battery cell 100. Also, a thermal resin (not shown) may be located between the pouch-type battery cell 100 and the pack case 200 and/or between the cell cover 300 and the pack case 200.

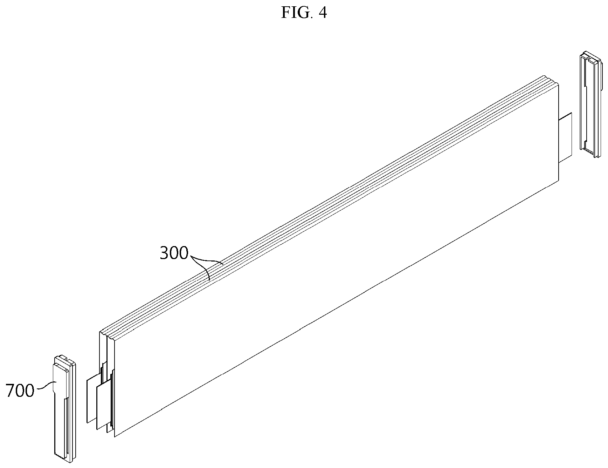

Also, the battery pack 10 according to an embodiment of the present disclosure may further include a bus bar 700 (see FIG. 4). The bus bar 700 may be connected to electrode leads of one or more pouch-type battery cells 100.

**In** particular, the bus bar 700 may connect a plurality of electrode leads to connect a plurality of battery cells 100 in series or in parallel. For example, electrode leads may be located at the front and rear of each pouch-type battery cell 100. **In** this case, the bus bars 700 may be located in front of or behind the battery cell 100 and may connect the electrode leads.

The bus bar 700 may be formed of an electrically conductive material such as copper or aluminum, and may directly contact the electrode leads.

Also, the battery pack 10 according to the present disclosure may further include a control module configured to control charging and discharging of the pouch-type battery cells 100. Referring to FIG. **1****,** the control module may include a battery management system (BMS) 500 and a battery blocking unit 600, and may be accommodated in the pack case 200 together with the battery cell 100 and the cell cover 300.

Also, the battery pack 10 according to an embodiment of the present disclosure may further include an end plate (not shown) coupled to an open portion of the cell cover 300. For example, front and rear sides of the cell cover 300 where the electrode leads are provided may be open. An end plate (not shown) may be coupled to the open portion of the cell cover 300. Furthermore, a hole or a cut portion for venting may be formed in the end plate (not shown).

When a plurality of battery cells 100 are accommodated in the cell cover 300, a separation structure between the battery cells 100 may be further included.

Referring to FIG. 7, in an embodiment of the present disclosure, a discharge hole 210 may be formed on at least one side of the pack case 200. According to the invention, one or more discharge holes 210 are formed at the bottom of the pack case 200.

The discharge hole 210 may pass through the pack case 200 from the inside to the outside to discharge gas in the inner space to the outside.

When a plurality of cell covers 300 are provided, the upper cover portion 310 formed on the cell cover portion 300 is configured to have a length that is changeable in a width direction. Through a change in a length of the cell cover 300 in the width direction, a communication area with the discharge hole 210 is variable.

FIG. 6 illustrates a process of changing a length of the cell cover 300 in the width direction according to a change in a thickness of the pouch-type battery cell 100 accommodated in the cell cover 300 (a change in the thickness according to expansion and contraction of the pouch-type battery cell 100) in the battery pack 10 according to an embodiment of the present disclosure.

Referring to FIG. 6, a cell assembly in which three battery cells 100 are stacked in a left-right direction while being surrounded by three cell covers 300 is illustrated.

FIGS. 6(a) to 6(c) illustrate a case where three situations sequentially occur in the cell assembly.

With reference to FIGS. 6(a) to 6(c), three battery cells 100 are referred to as a first cell 100a, a second cell 100b, and a third cell 100c from left to right. Also, three cell covers 300 are referred to as a first cover 300a, a second cover 300b, and a third cover 300c from left to right.

First, referring to FIG. 6(a), in a general or normal pack state, widths of a plurality of battery cells 100a, 100b, 100c and a plurality of cell covers 300a, 300b, 300c respectively surrounding the plurality of battery cells 100a, 100b, 100c may be uniform.

Then, when thermal runaway or the like occurs and develops in an arbitrary battery cell 100, the battery cell 100 may expand. For example, referring to FIG. 6(b), thermal runaway may occur in the second cell 100b, and in this case, a thickness of the second cell 100b may increase.

Due to an increase in a thickness or section of the battery cell 100, a length of the cell cover 300 surrounding the battery cell 100, that is, the second cover 300b, in the width direction increases as shown in FIG. 6(b). That is, a width of the cell cover 300 (here, the second cover 300b) increases.

When the thermal runaway in the battery cell 100 ends, the thickness or section may be reduced compared to the initial thickness or section due to discharge of an ejection material. For example, it is found that a thickness of the second cell 100b of FIG. 6(c) is less than that of the second cell 100b of FIG. 6(b). **In** this case, it may be said that a thickness of the second cell 100b increases due to thermal runaway and then decreases when the thermal runaway ends.

When a thickness of the second cell 100b decreases in FIG. 6(c), a length of the second cover 300b surrounding the second cell 100b in the width direction decreases. That is, when a thickness or size of the battery cell 100 decreases, a length of the cell cover 300 surrounding the battery cell 100 in the width direction may also decrease.

Also, comparing FIGS. 6(a) and 6(b), a thickness of the first cell 100a in FIG. 6(b) may be less than that in a normal state of FIG. 6(a) because thermal runaway of the first cell 100a develops and then ends.

In this case, a width of the first cover 300a surrounding the first cell 100a may decrease. In particular, referring to FIG. 6(b), a width of the first cover 300a may decrease as a width of the second cover 300b increases.

That is, in FIG. 6(b), because the first cover 300a is pressed from right to left as a width of the second cover 300b increases and a thickness of the first cell 100a decreases when thermal runaway ends, a space may be secured by the decreased thickness of the first cell 100a in the first cover 300a, thereby reducing a width of the first cover 300a.

According to this embodiment of the present disclosure, a length of the cell cover 300 in the width direction may adaptively change according to expansion or contraction of the battery cell 100 accommodated therein. Accordingly, because a shape of the cell cover 300 appropriately changes according to a state of the plurality of battery cells 100, in particular, a thermal runaway situation, an overall stacked state of the battery cells 100 and the cell cover 300 may be stably maintained without collapsing.

Moreover, when thermal runaway occurs in an arbitrary battery cell 100, the thermal runaway may propagate to adjacent cells. According to the above embodiment, because a width of the cell cover 300 sequentially changes according to the propagation of the thermal runaway, an overall shape of the battery pack 10 may not greatly change.

Also, the cell cover 300 may communicate with the discharge hole 210 of the pack case 200. Accordingly, venting gas or the like in the cell cover 300 may be discharged to an external space through the discharge hole 210 of the pack case 200.

Because venting gas or the like is appropriately discharged to the outside of the pack case 200, explosion of the battery pack 10 due to an increase in internal pressure of the pack case 200 may be prevented, and the intensification or propagation of thermal runaway due to accumulation of heat in the pack case 200 due to the high-temperature venting gas may be more effectively suppressed.

The cell cover 300 may be configured so that a communication area with the discharge hole 210 of the pack case 200 is variable through a change in a length in the width direction.

For example, when a state changes from FIG. 6(a) to FIG. 6(b), a width of the second cover 300b increases. **In** this case, an area of the second cover 300b communicating with the discharge hole 210 formed in the pack case 200 may increase.

**In** particular, when the width of the second cover 300b increases, a width of another cell cover 300, for example, the first cover 300a, may decrease. **In** this case, a communication area between the first cover 300a and the discharge hole 210 may decrease, and the second cover 300b may expand to a portion of the discharge hole 210 having communicated with the first cover 300a, thereby increasing a communication area.

For example, although one cell cover 300 communicates with two discharge holes 210 (each of the first cover 300a, the second cover 300b, and the third cover 300c communicates with two discharge holes 210) in a normal state as shown in FIG. 6(a), when a width of the second cover 300b increases due to expansion of the second cell 100b in FIG. 6(b), the second cover 300b may communicate with three discharge holes 210.

That is, although the second cover 300b communicates with two discharge holes 210 in a normal state, when the second cell 100b expands, the second cover 300b communicates with three discharge holes 210, thereby increasing a communication area.

According to this embodiment of the present disclosure, because the number of discharge holes 210 communicating with the cell cover 300 changes according to expansion or contraction of the battery cell 100 accommodated in the cell cover 300 to change an overall communication area, appropriate internal pressure control is possible.

In particular, when thermal runaway develops in the battery cell 100 accommodated in the cell cover 300, a large amount of venting gas may be discharged through the discharge hole 210. In this case, because a communication area between the cell cover 300 and the discharge hole 210 increases, an excessive increase in internal pressure of the cell cover 300 may be suppressed.

Also, because the amount of venting gas discharged may not be large in the battery cell 100 in which thermal runaway has already been completed, a discharge structure adaptively efficient according to a situation may be implemented by reducing a communication area between the discharge hole 210 and the cell cover 300 in which the battery cell 100 is accommodated.

Moreover, in the embodiment of the present disclosure, the discharge holes 210 may be used in parallel. That is, the cell cover 300 may be configured to use the discharge hole 210 communicating with another cell cover 300 according to a situation through a change in a width.

The discharge hole 210 of the pack case 200 may be formed long along a direction in which the plurality of battery cells 300 are arranged. For example, when the plurality of cell covers 300 in which the battery cells 100 are accommodated are located side by side in the left-right direction, the discharge hole 210 of the pack case 200 may extend long in the left-right direction.

Alternatively, referring to FIG. 7, for example, a plurality of discharge holes 210 may be formed along a direction in which the plurality of cell covers 300 are arranged. For example, in the above embodiment, a plurality of discharge holes 210 of the pack case 200 may be formed in the left-right direction. However, the present disclosure is not limited thereto, and the number, arrangement, and shapes of the discharge holes 210 may be changed.

Referring to FIG. 5, an upper cover portion of the cell cover 300 may be formed in a wrinkled shape. **In** particular, two side surfaces of the cell cover 300 may be formed in flat plate shapes and one upper side of the cell cover 300 may be formed in a wrinkled shape.

Referring to FIG. 8 that is a modified example of FIG. 5, the upper cover portion 310 may be formed on the upper side of the cell cover 300, and a triangle portion 319 folded into a triangular shape may be formed on the upper cover portion 310. That is, the upper side of the cell cover 300 may be folded to have multiple triangular shapes.

As described above, according to this embodiment, a length of the battery cell 100 in the width direction may more easily change when thermal runaway occurs. The upper side and the two side surfaces of the cell cover 300 may have different thicknesses. **In** particular, the upper side may be thinner than the two side surfaces.

Also, the cell cover 300 may be configured to discharge venting gas downward. In particular, the cell cover 300 may be formed in an n-fin shape with the upper side and the left and right surfaces closed, based on the battery cell 100 accommodated in the cell cover 300. **In** this case, the cell cover 300 may be configured to discharge venting gas in the cell cover 300 downward.

As described above, the discharge hole 210 may be formed at the bottom of the pack case 200. Because the discharge hole 210 of the pack case 200 may communicate with an inner space of the cell cover 300, venting gas generated from the battery cell 100 in the cell cover 300 may be discharged to the outside through the discharge hole 210.

That is, the cell cover 300 and the battery cell 100 are seated on the bottom of the pack case 200, and venting gas discharged from the battery cell 100 may be blocked from being discharged upward, leftward, and rightward due to the cell cover 300. The venting gas may be discharged only downward through the discharge hole 210 of the pack case 200.

**In** this embodiment, directional venting, that is, venting in a pre-set direction, becomes possible through the cell cover 300 and the pack case 200. Furthermore, according to an embodiment of the present disclosure, internal pressure may be efficiently relieved, due to rapid and smooth gas emission along with directional venting by the cell cover 300.

Referring to FIG. 6, the battery pack 10 according to the present disclosure may include a thermal barrier 800. The thermal barrier 800 may be formed as a pad formed of a heat insulating material, and may be located between adjacent cell covers 300. For example, the thermal barrier 800 may be formed to a thickness of, but not limited to, about 2.0 t.

The battery pack 10 according to the present disclosure may further include an insulating or preventing pad such as glass fiber reinforced plastic (GFRP) at an outermost side of a cell assembly formed by stacking a plurality of cell covers 300 and a plurality of battery cells 100 in a stacking direction. For example, GFRP may be formed to a thickness of, but not limited to, about 0.35 t. Also, the battery pack 10 according to the present disclosure may further include a heating pad.

One or more battery modules may be accommodated in the battery pack 10. **In this** case, the description of elements described in the above embodiments, in particular, the battery cell 100 and the cell cover 300 may apply to the battery module.

One or more battery modules according to another aspect of the present disclosure may be accommodated in the inner space of the pack case 200, and each of the battery modules may include a plurality of pouch-type battery cells 100, a module case having an inner space in which the pouch-type battery cells 100 are accommodated and including the discharge hole 210 formed on at least one side thereof, and a plurality of cell covers 300 provided in the inner space of the module case to at least partially surround at least some of the plurality of pouch-type battery cells 100 and configured to have a length that is changeable in the width direction.

The discharge hole 210 for discharging venting gas in the cell cover 300 may be formed at the bottom of the module case. The discharge hole 210 of the module case may be formed to communicate with a receiving space of the cell cover 300 accommodated in the module case. **In** this embodiment, when venting gas or the like is generated from the battery cell 100 accommodated in the cell cover 300, the generated venting gas may be discharged downward without being discharged upward, leftward, or rightward.

**In** particular, the cell cover 300 may be configured so that a communication area with the discharge hole 210 of the module case is variable through a change in a length in the width direction. The discharge hole 210 of the module case may be formed to communicate with the discharge hole 210 of the pack case 200.

The description of the battery pack 10 may equally or similarly apply to the pouch-type battery cells 100 and the cell cover 300 included in the battery module, and thus a detailed description will be omitted.

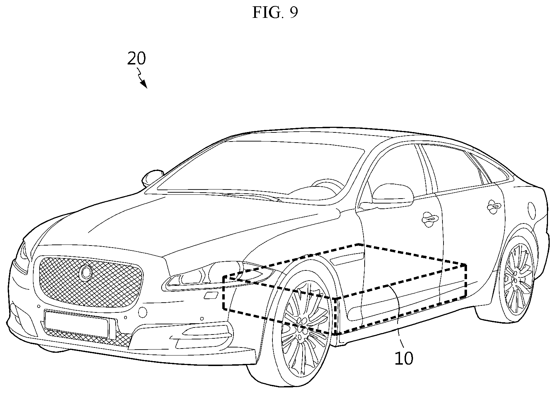

FIG. 9 is a view for describing a vehicle including a battery pack according to each embodiment of the present disclosure.

A vehicle 20 according to an embodiment of the present disclosure may include one or more battery packs 10 according to each of the above embodiments. The vehicle 20 includes any of various vehicles 20 provided to use electricity such as an electric vehicle or a hybrid vehicle.

Although the embodiments of the present disclosure have been illustrated and described above, the present disclosure is not limited to the above-described specific embodiments. Various modified embodiments may be made by one of ordinary skill in the art without departing from the scope of the present disclosure as claimed in the claims.

### INDUSTRIAL APPLICABILITY

The present disclosure relates to a battery pack and a vehicle including the same, and particularly, may be used in industries related to secondary batteries.

## Claims

1. A battery pack (10) comprising:
a plurality of pouch-type battery cells (100);
a pack case (200) having an inner space in which the plurality of pouch-type battery cells (100) are accommodated; and
a plurality of cell covers (300) provided in the inner space of the pack case (200) to at least partially surround at least some of the plurality of pouch-type battery cells (100), the plurality of cell covers (300) being each configured to have a length that is changeable in a width direction according to a change in a thickness of the pouch type battery cell (100),
wherein the cell cover (300) comprises an upper cover portion (310) formed on an upper side, and
wherein the upper cover portion (310) is formed in a wave shape or a wrinkled shape, **characterized in that**
one or more discharge holes (210) are formed at the bottom of the pack case (200), and
a communication area of the cell cover (300) with the one or more discharge holes (210) is variable through a change in the length of the cell cover (300) in the width direction.

2. The battery pack (10) according to claim **1,** wherein the cell cover (300) is configured to surround both side surfaces and an upper side of the at least some pouch-type battery cells (100).

3. The battery pack (10) according to claim **1,**
wherein the upper cover portion is formed in a wrinkled shape.

4. The battery pack (10) according to claim 3, wherein a triangle portion (319) folded into a triangular shape is formed on the upper cover portion (310).

5. The battery pack (10) according to claim 1, wherein the cell cover (300) is configured to surround one or more pouch-type battery cells (100) and maintain the surrounded battery cells (100) in an upright state..

6. The battery pack (10) according to claim 1, wherein the cell cover (300) is formed in an 'n' shape.

7. The battery pack (10) according to claim 1, wherein the cell cover (300) is formed of a metal material.

8. The battery pack (10) according to claim 1, further comprising a bus bar (700) configured to connect a plurality of electrode leads.

9. The battery pack (10) according to claim 1, wherein the cell cover (300) is configured to partially surround the pouch-type battery cell (100) so that at least one side of the surrounded pouch-type battery cell (100) is exposed to outside.

10. The battery pack (10) according to claim 1, wherein the cell cover (300) is configured so that at least one side of the surrounded pouch-type battery cell (100) is exposed toward a bottom surface of the battery pack.

11. The battery pack (10) according to claim 1, wherein the cell cover (300) is directly seated on the pack case (200).

12. A vehicle comprising the battery pack (10) according to any one of claims 1 to 11.

## Patentansprüche

1. Batteriepack (10), umfassend:
eine Vielzahl von Pouch-Typ-Batteriezellen (100);
ein Packgehäuse (200) mit einem Innenraum, in dem die Vielzahl von Pouch-Typ-Batteriezellen (100) untergebracht sind; und
eine Vielzahl von Zellenabdeckungen (300), die im Innenraum des Packgehäuses (200) vorgesehen sind, um mindestens einige der Vielzahl von Pouch-Typ-Batteriezellen (100) zumindest teilweise zu umschließen, wobei die Vielzahl von Zellenabdeckungen (300) jeweils so konfiguriert ist, dass sie eine Länge aufweist, die in einer Breitenrichtung entsprechend einer Änderung einer Dicke der Pouch-Typ-Batteriezelle (100) veränderbar ist,
wobei die Zellenabdeckung (300) einen oberen Abdeckungsabschnitt (310) umfasst, der an einer Oberseite ausgebildet ist, und
wobei der obere Abdeckungsabschnitt (310) in einer Wellenform oder einer gewellten Form ausgebildet ist,
**dadurch gekennzeichnet, dass** ein oder mehrere Auslasslöcher (210) am Boden des Packgehäuses (200) ausgebildet sind, und ein Kommunikationsbereich der Zellenabdeckung (300) mit dem einen oder den mehreren Auslasslöchern (210) durch eine Änderung der Länge der Zellenabdeckung (300) in der Breitenrichtung variabel ist.

2. Batteriepack (10) nach Anspruch 1, wobei die Zellenabdeckung (300) so konfiguriert ist, dass sie beide Seitenflächen und eine Oberseite der mindestens einigen Pouch-Typ-Batteriezellen (100) umschließt.

3. Batteriepack (10) nach Anspruch 1, wobei der obere Abdeckungsabschnitt in einer gewellten Form ausgebildet ist.

4. Batteriepack (10) nach Anspruch 3, wobei ein Dreiecksabschnitt (319), der zu einer dreieckigen Form gefaltet ist, auf dem oberen Abdeckungsabschnitt (310) ausgebildet ist.

5. Batteriepack (10) nach Anspruch 1, wobei die Zellenabdeckung (300) so konfiguriert ist, dass sie eine oder mehrere Pouch-Typ-Batteriezellen (100) umschließt und die umschlossenen Batteriezellen (100) in einem aufrechten Zustand hält.

6. Batteriepack (10) nach Anspruch 1, wobei die Zellenabdeckung (300) in einer 'n'-Form ausgebildet ist.

7. Batteriepack (10) nach Anspruch 1, wobei die Zellenabdeckung (300) aus einem Metallmaterial ausgebildet ist.

8. Batteriepack (10) nach Anspruch 1, ferner umfassend eine Sammelschiene (700), die so konfiguriert ist, dass sie eine Vielzahl von Elektrodenleitungen verbindet.

9. Batteriepack (10) nach Anspruch 1, wobei die Zellenabdeckung (300) so konfiguriert ist, dass sie die Pouch-Typ-Batteriezelle (100) teilweise umschließt, so dass mindestens eine Seite der umschlossenen Pouch-Typ-Batteriezelle (100) nach außen freiliegt.

10. Batteriepack (10) nach Anspruch 1, wobei die Zellenabdeckung (300) so konfiguriert ist, dass mindestens eine Seite der umschlossenen Pouch-Typ-Batteriezelle (100) zu einer Bodenfläche des Batteriepacks hin freiliegt.

11. Batteriepack (10) nach Anspruch 1, wobei die Zellenabdeckung (300) direkt auf dem Packgehäuse (200) aufgesetzt ist.

12. Fahrzeug, umfassend den Batteriepack (10) nach einem der Ansprüche 1 bis 11.

## Revendications

1. Bloc-batterie (10) comprenant :
une pluralité de cellules de batterie de type poche (100) ;
un boîtier de bloc (200) ayant un espace intérieur dans lequel la pluralité de cellules de batterie de type poche (100) sont logées ; et
une pluralité de couvercles de cellule (300) prévus dans l'espace intérieur du boîtier de bloc (200) pour entourer au moins partiellement au moins certaines de la pluralité de cellules de batterie de type poche (100), la pluralité de couvercles de cellule (300) étant chacun configurés pour avoir une longueur qui peut être modifiée dans une direction de la largeur en fonction d'un changement d'épaisseur de la cellule de batterie de type poche (100),
dans lequel le couvercle de cellule (300) comprend une partie de couvercle supérieure (310) formée sur un côté supérieur, et
dans lequel la partie de couvercle supérieure (310) est formée en une forme d'onde ou une forme plissée,
**caractérisé en ce que**
un ou plusieurs trous d'évacuation (210) sont formés au fond du boîtier de bloc (200), et une zone de communication du couvercle de cellule (300) avec le ou les trous d'évacuation (210) est variable par un changement de la longueur du couvercle de cellule (300) dans la direction de la largeur.

2. Bloc-batterie (10) selon la revendication 1, dans lequel le couvercle de cellule (300) est configuré pour entourer les deux surfaces latérales et un côté supérieur des au moins certaines cellules de batterie de type poche (100).

3. Bloc-batterie (10) selon la revendication 1, dans lequel la partie de couvercle supérieure est formée en une forme plissée.

4. Bloc-batterie (10) selon la revendication 3, dans lequel une partie triangulaire (319) pliée en une forme triangulaire est formée sur la partie de couvercle supérieure (310).

5. Bloc-batterie (10) selon la revendication 1, dans lequel le couvercle de cellule (300) est configuré pour entourer une ou plusieurs cellules de batterie de type poche (100) et maintenir les cellules de batterie (100) entourées dans un état vertical.

6. Bloc-batterie (10) selon la revendication 1, dans lequel le couvercle de cellule (300) est formé en une forme de 'n'.

7. Bloc-batterie (10) selon la revendication 1, dans lequel le couvercle de cellule (300) est formé d'un matériau métallique.

8. Bloc-batterie (10) selon la revendication 1, comprenant en outre une barre omnibus (700) configurée pour connecter une pluralité de conducteurs d'électrode.

9. Bloc-batterie (10) selon la revendication 1, dans lequel le couvercle de cellule (300) est configuré pour entourer partiellement la cellule de batterie de type poche (100) de sorte qu'au moins un côté de la cellule de batterie de type poche (100) entourée soit exposé vers l'extérieur.

10. Bloc-batterie (10) selon la revendication 1, dans lequel le couvercle de cellule (300) est configuré de sorte qu'au moins un côté de la cellule de batterie de type poche (100) entourée soit exposé vers une surface inférieure du bloc-batterie.

11. Bloc-batterie (10) selon la revendication 1, dans lequel le couvercle de cellule (300) est directement posé sur le boîtier de bloc (200).

12. Véhicule comprenant le bloc-batterie (10) selon l'une quelconque des revendications 1 à 11.
